(19) **Europäisches Patentamt / European Patent Office / Office européen des brevets**

(11) **EP 4 293 739 B1**

(12) **EUROPEAN PATENT SPECIFICATION**

(45) Date of publication and mention
of the grant of the patent:
**29.01.2025 Bulletin 2025/05**

(21) Application number: **23177785.5**

(22) Date of filing: **06.06.2023**

(51) International Patent Classification (IPC):
*H01M 4/04* (2006.01)      *H01M 4/62* (2006.01)
*H01M 10/38* (2006.01)

(52) Cooperative Patent Classification (CPC):
**H01M 10/38; H01M 4/0402; H01M 4/62;
H01M 4/625; H01M 4/626;** Y02E 60/10; Y02P 70/50

(54) **ENERGY STORAGE BATTERY AND PREPARATION METHOD THEREOF AND ENERGY STORAGE BATTERY PACK**

ENERGIESPEICHERBATTERIE UND HERSTELLUNGSVERFAHREN DAFÜR SOWIE ENERGIESPEICHERBATTERIEPACK

BATTERIE DE STOCKAGE D'ÉNERGIE ET SON PROCÉDÉ DE PRÉPARATION ET BLOC-BATTERIE DE STOCKAGE D'ÉNERGIE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.06.2022 CN 202210631028**

(43) Date of publication of application:
**20.12.2023 Bulletin 2023/51**

(73) Proprietors:
• **Zhang, Qingnan**
  **Beijing 100024 (CN)**
• **Tang, Luping**
  **Beijing 100024 (CN)**
• **Jiang, Yang**
  **Beijing 100024 (CN)**
• **Shen, Yilei**
  **Shanghai 200136 (CN)**

(72) Inventors:
• **Zhang, Qingnan**
  **Beijing 100024 (CN)**
• **Tang, Luping**
  **Beijing 100024 (CN)**
• **Jiang, Yang**
  **Beijing 100024 (CN)**
• **Shen, Yilei**
  **Shanghai 200136 (CN)**

(74) Representative: **Cabinet Beaumont**
**4, Place Robert Schuman**
**B.P. 1529**
**38025 Grenoble Cedex 1 (FR)**

(56) References cited:
**CN-A- 108 933 263      CN-A- 109 585 854
GB-A- 905 280**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present application relates to the field of concrete batteries, in particular to an energy storage battery and a preparation method thereof and an energy storage battery pack.

### BACKGROUND

Renewable energy is one of the leading directions to achieve carbon neutrality and to accelerate the transformation of energy structure. With the large-scale development of renewable energy, there is bound to be a greater demand for energy storage technologies. Existing technologies for storing renewable energy are costly, and thus cheap and accessible energy storage technologies and materials are receiving more and more attention.

Another major leading direction to achieve carbon neutrality is low-carbon. Concrete is the second most consumed material in the world after water, and the most widely used building material. The cement and concrete industry is under great pressure to achieve energy saving and emission reduction in the general situation of achieving carbon neutrality due to its high energy consumption and high emission. Therefore, it is important to develop a low-cost, low-carbon and large-scale energy storage system to achieve carbon neutrality Efforts to achieve such goals have been made for example in patent literature GB 905 280 A, CN 109 585 854 A and CN 108 933 263 A.

### SUMMARY

The purpose of the present application is to provide an energy storage battery and a preparation method thereof and an energy storage battery pack, to obtain a low-cost and low-carbon large-scale energy storage system. The specific technical solutions are as follows.

In a first aspect, the present application provides an energy storage battery including a cathode cement layer, an anode cement layer and a membrane cement layer arranged between the cathode cement layer and the anode cement layer. The cathode cement layer comprises a cathode conductive grid construction and a cathode conductive cement-based material arranged on both sides of the cathode conductive grid construction. The anode cement layer comprises an anode conductive grid construction and an anode conductive cement-based material arranged on both sides of the anode conductive grid construction. The membrane cement layer comprises an anion exchange resin and a first cement-based material. The cathode conductive cement-based material is obtained by curing the cathode conductive cement mortar consisting of 0.3 wt% to 9 wt% of a conductive agent and 91 wt% to 99.7 wt% of a second cement mortar. The anode conductive cement-based material is obtained by curing the anode conductive cement mortar consisting of 0.3 wt% to 9 wt% of the conductive agent and 91 wt% to 99.7 wt% of the second cement mortar. The conductive agent is at least one selected from the group consisting of chopped carbon fiber, carbon black and expanded graphite.

In one embodiment of the present application, the second cement mortar comprises 15 wt% to 25 wt% of cement, 40 wt% to 50 wt% of sand, 20 wt% to 35 wt% of water, 0 wt% to 3 wt% of a plasticizer and 0.1 wt% to 3 wt% of a dispersant. The first cement-based material is obtained by curing a first cement mortar comprising 25 wt% to 50 wt% of cement, 30 wt% to 55 wt% of sand and 15 wt% to 25wt% of an alkali-based solution.

In one embodiment of the present application, the cathode cement layer has a thickness of 5 mm to 50 mm; the anode cement layer has a thickness of 5 mm to 50 mm; and the membrane cement layer has a thickness of 0.5 mm to 5 mm.

In one embodiment of the present application, the cathode metal coated carbon fiber grid construction contains a cathode metal coating of nickel coating having a thickness of 0.1 $\mu$m to 1 mm; and the anode metal coated carbon fiber grid construction contains an anode metal coating of iron coating having a thickness of 0.1 $\mu$m to 1 mm. The carbon fiber bundle has an average width of 1 mm to 20 mm and an average thickness of 0.3 mm to 3 mm.

In one embodiment of the present application, the cathode metal coated carbon fiber grid construction is obtained by superposing N layers of cathode metal coated carbon fiber grid, $2 \leq N \leq 9$; and the anode metal coated carbon fiber carbon fiber grid construction is obtained by superposing M layers of anode metal coated carbon fiber grid, $2 \leq M \leq 9$. N and M are the same or different. The superposing is in the same or different directions.

In one embodiment of the present application, the plasticizer is selected from the group consisting of polycarboxylic acids, phthalic acid esters and naphthalenes.

In one embodiment of the present application, the dispersant is selected from the group consisting of celluloses, alkylphenol polyethers, styrene-carboxylic acid copolymers and other classes of dispersants, and the other classes of dispersants are at least one selected from the group consisting of sulfonated melamine formaldehyde, modified lignosulfonate and triethyl phosphate.

In one embodiment of the present application, the alkali-based solution comprises 5% to 30% of solute, and the solute is at least one selected from the group consisting of lithium hydroxide, potassium hydroxide and sodium hydroxide.

In one embodiment of the present application, the weight ratio of the anion exchange resin to the first cement-based material is (5%-25%):(75%-95%).

In a second aspect, the present application provides a method for preparing the energy storage battery provided in the first aspect of the present application. The method comprises the steps of:

embedding the cathode conductive grid construction into the cathode conductive cement mortar to form a semi-wet cathode cement layer, embedding the anode conductive grid construction into the anode conductive cement mortar to form a semi-wet anode cement layer, and mixing the first cement mortar and the anion exchange resin uniformly to form a semi-wet membrane cement layer;

arranging the semi-wet membrane cement layer between the semi-wet cathode cement layer and the semi-wet anode cement layer to form a three-layer bonded cement construction, and pre-curing the three-layer bonded cement construction to obtain a semi-cured three-layer bonded cement construction; and

coating the surface of the semi-cured three-layer bonded cement construction with an outer layer of cement mortar, then curing the outer layer of cement mortar to form a mechanical protecting shell, and thus obtaining the energy storage battery.

In one embodiment of the present application, the semi-wet cathode cement layer or the semi-wet anode cement layer is prepared by horizontal coating or vertical coating. In one embodiment of the present application, the semi-wet membrane cement layer is prepared by horizontal coating or vertical mold casting.

In one embodiment of the present application, the three-layer bonded cement construction is assembled by a combination of horizontal coating and vertical mold casting.

In a third aspect, the present application provides an energy storage battery pack including a plurality of energy storage batteries provided in the first aspect of the present application connected in series and/or in parallel.

Beneficial effects of the present application are as follows.

The present application provides an energy storage battery and a preparation method thereof and an energy storage battery pack, wherein the energy storage battery comprises a cathode cement layer, an anode cement layer and a membrane cement layer arranged between the cathode cement layer and the anode cement layer; the cathode cement layer comprises a cathode conductive cement-based material and a cathode conductive grid construction embedded in the cathode conductive cement-based material, the anode cement layer comprises an anode conductive cement-based material and an anode conductive grid construction embedded in the anode conductive cement-based material, and the membrane cement layer comprises an anion exchange resin and a first cement-based material. The energy storage battery provided by the present application can achieve the conversion from cement concrete to low-carbon or negative-carbon products, in which the raw materials used are low-cost and widely available. The energy storage battery provided by the present application can be used in large-scale energy storage systems, in which the electrode materials used are overcharge-resistant, overdischarge-resistant and short-circuit-proof and have high safety performance, compared to those of commercial lithium batteries.

By all means, the implementation of any product or method of the present application is not necessarily required to achieve all the advantages described above.

## BRIEF DESCRIPTION OF DRAWINGS

In order to illustrate the technical solution of the present application more clearly, the following is a brief description of the drawings that need to be used in the examples. It is obvious that the drawings in the following description are only some of the examples of the present invention, and other examples can be obtained by those skilled in the art according to these drawings.

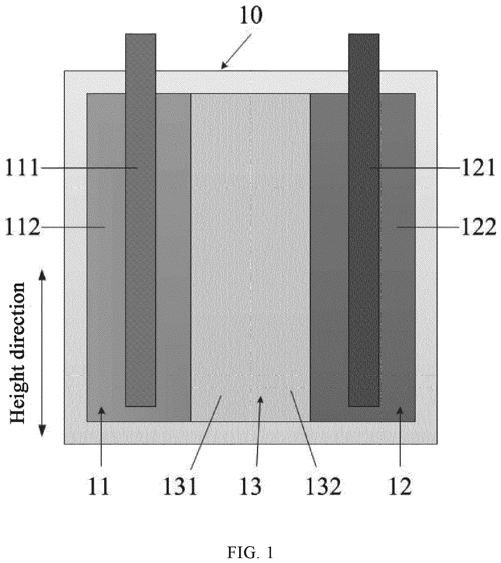

FIG. 1 shows a cross-sectional view along the height direction of the energy storage battery in one embodiment of the present application.

## DETAILED DESCRIPTION

In order to make the purpose, technical solutions and advantages of the present application more clearly, the present application is further described in detail with reference to the attached drawings and examples. It is clear that the examples described herein are only some examples of the present application but not all examples.

In the first aspect, the present application provides an energy storage battery. As shown in FIG. 1, the energy storage battery 10 comprises a cathode cement layer 11, an anode cement layer 12 and a membrane cement layer 13 arranged between the cathode cement layer 11 and the anode cement layer 12; the cathode cement layer 11 comprises a cathode conductive grid construction 111 and a cathode conductive cement-based material 112 arranged on both sides of the cathode conductive grid construction 111; the anode cement layer 12 comprises an anode conductive grid construction 121 and an anode conductive cement-based material 122 arranged on both sides of the anode conductive grid construction 121, and the membrane cement layer 13 comprises an anion exchange resin 131 and a first cement-based material 132.

The cathode conductive grid construction is selected from the group consisting of cathode metal coated carbon fiber grid constructions, and the anode conductive grid construction is selected from the group consisting of anode metal coated carbon fiber grid constructions. The cathode conductive cement-based material is obtained by curing the cathode conductive cement mortar consisting of 0.3 wt% to 9 wt% of a conductive agent and 91 wt% to 99.7 wt% of a second cement mortar. The anode conductive cement-based material is obtained by curing the anode conductive cement mortar consisting of 0.3 wt% to 9 wt% of the conductive agent and 91 wt% to 99.7 wt% of the second cement mortar. The conductive agent is at least one selected from the group consisting of chopped carbon fiber, carbon black and expanded graphite.

In one embodiment of the present application, the second cement mortar comprises 15 wt% to 25 wt% of cement, 40 wt% to 50 wt% of sand, 20 wt% to 35 wt% of water, 0 wt% to 3 wt% of a plasticizer and 0.1 wt% to 3 wt% of a dispersant. The first cement-based material is obtained by curing the first cement mortar comprising 25 wt% to 50 wt% of cement, 30 wt% to 55 wt% of sand and 15 wt% to 25wt% of an alkali-based solution.

In the present application, a single fiber bundle of the chopped carbon fiber has an average length of 2 mm to 8 mm, and the fiber filaments have an average diameter of 3 $\mu$m to 12 $\mu$m. The average particle size distribution of the carbon black is 5 nm to 10 $\mu$m. The expanded graphite has an outer diameter of 20 $\mu$m to 700 $\mu$m and a length of 1 mm to 10 mm. By selecting the conductive agent that meets the above characteristics, the cathode conductive cement-based material and the anode conductive cement-based material have appropriate conductive properties, such that the cathode cement layer and the anode cement layer can play roles as the cathode and the anode of the energy storage battery.

In the present application, there is no particular limitation on the shape of a single grid of the cathode conductive grid construction or the anode conductive grid construction, as long as the purpose of the present application can be achieved. The shape of the single grid can be, for example, square, rhombus or triangle. In the present application, the average side length of the single grid in the cathode conductive grid construction or the anode conductive grid construction is 4 mm to 500 mm. There is no special limitation on the weaving density of the grid (the number of grids per unit area), which can be selected by those skilled in the art according to the size of the actual energy storage battery, as long as the purpose of the present application can be achieved.

In one embodiment of the present application, the cathode cement layer has a thickness of 5 mm to 50 mm; the anode cement layer has a thickness of 5 mm to 50 mm; and the membrane cement layer has a thickness of 0.5 mm to 5 mm. The energy storage battery provided in the present application can be applied wherever cement concrete is applicable. It is conducive to the application of energy storage battery provided in the present application in civil and industrial buildings, when the thicknesses of the cathode cement layer, the anode cement layer and the membrane cement layer of a single energy storage battery meet the above range.

In one embodiment of the present application, the cathode metal coated carbon fiber grid construction contains a cathode metal coating of nickel coating having a thickness of 0.1 $\mu$m to 1 mm; and the anode metal coated carbon fiber grid construction contains an anode metal coating of iron coating having a thickness of 0.1 $\mu$m to 1 mm. The carbon fiber bundle has an average width of 1 mm to 20 mm and an average thickness of 0.3 mm to 3 mm. In the present application, nickel in the nickel coating is a cathode active material, and iron in the iron coating is an anode active material. Selecting the active materials as mentioned above and adjusting the thicknesses of nickel coating and iron coating within the scope of the present application is conducive to prolonging the discharge time of the energy storage battery and improving the capacity and energy density of the energy storage battery.

In the present application, the cathode metal coated carbon fiber grid construction or the anode metal coated carbon fiber grid construction further contains a carbon fiber grid woven from the carbon fiber bundles. There is no particular limitation on the parameters of carbon fiber bundles in the present application, as long as the purpose of the present application can be achieved. For example, the carbon fiber bundles can have an average width of 1 mm to 20 mm and an average thickness of 0.3 mm to 3 mm, a single carbon fiber in the carbon bundles can have an average diameter of 3 $\mu$m to 12 $\mu$m, and the number of carbon fibers contained in a single cross section of a single carbon fiber bundle is 500 to 500000.

In one embodiment of the present application, the cathode metal coated carbon fiber grid construction is obtained by superposing N layers of the cathode metal coated carbon fiber grid, $2 \leq N \leq 9$; and the anode metal coated carbon fiber grid construction is obtained by superposing M layers of the anode metal coated carbon fiber grid, $2 \leq M \leq 9$. N and M are the same or different. The superposing is in the same or different directions.

In the present application, the deflection angle $\theta$ of the superposing of the cathode metal coated carbon fiber grid construction is

$$\theta = \frac{90°}{N}$$

In the present application, the cathode metal coated carbon fiber grid construction is superposing in the following way: supposing the weaving directions of the two adjacent carbon fiber bundles of the first layer of the cathode metal coated carbon fiber grid are 0° and 90°, respectively, the weaving directions of the two adjacent carbon fiber bundles of the second layer of the cathode metal coated carbon fiber grid placed next are $0+\theta°$ and $90+\theta°$, respectively, the weaving directions of the two adjacent carbon fiber bundles of the third layer of the cathode metal coated carbon fiber grid placed next to the second layer of the cathode metal coated carbon fiber grid are $0+2\theta°$ and $90+2\theta°$, and so on until the weaving directions of the two adjacent carbon fiber bundles of the $N^{th}$ layer of the cathode metal coated carbon fiber grid placed lastly are $0+N\theta°$ and $90+N\theta°$, respectively. When multiple layers of cathode metal coated carbon fiber grid are used, each layer of the carbon fiber grid is made using the same weaving method, and the weaving method of the second layer to the $N^{th}$ layer of the carbon fiber grid is performed with reference to the first layer. Conductive cement mortar needs to be coated between each layer of the cathode metal coated carbon fiber grid. Each layer of the conductive cement mortar needed to be coated between the superposed layers of the cathode metal coated carbon fiber grid has a thickness of 1 mm to 10 mm. As an example, the shape of a single grid in the cathode carbon fiber grid construction may be square, and the weaving directions of the adjacent two carbon fiber bundles in different directions of the carbon fiber grid are 0° and 90°, respectively, with an angle of 90° between them.

In the present application, the deflection angle $\theta$ of the superposing of the anode metal coated carbon fiber grid construction is

$$\theta = \frac{90°}{M}$$

In the present application, the anode metal coated carbon fiber grid construction is superposing in the following way: supposing the weaving directions of the two adjacent carbon fiber bundles of the first layer of the anode metal coated carbon fiber grid are 0° and 90°, respectively, the weaving directions of the two adjacent carbon fiber bundles of the second layer of the anode metal coated carbon fiber grid placed next are $0+\theta°$ and $90+\theta°$, respectively, and the weaving directions of the two adjacent carbon fiber bundles of the third layer of the anode metal coated carbon fiber grid placed next to the second layer of the anode metal coated carbon fiber grid are $0+2\theta°$ and $90+2\theta°$, and so on until the weaving directions of the two adjacent carbon fiber bundles of the $M^{th}$ layer of the anode metal coated carbon fiber grid placed lastly are $0+M\theta°$ and $90+M\theta°$, respectively. When multiple layers of the anode metal coated carbon fiber grid are used, each layer of the carbon fiber grid is made using the same weaving method, and the weaving method of the second layer to $M^{th}$ layer of the carbon fiber grid is performed with reference to the first layer. Conductive cement mortar needs to be coated between each layer of the anode metal coated carbon fiber grid. Each layer of the conductive cement mortar needed to be coated between the superposed layers of the anode metal coated carbon fiber grid has a thickness of 1 mm to 10 mm. As an example, the shape of a single grid in the anode carbon fiber grid construction may be square, and the weaving directions of the adjacent two carbon fiber bundles in different directions of the carbon fiber grid are 0° and 90°, respectively, with an angle of 90° between them.

In one embodiment of the present application, the plasticizer is selected from the group consisting of polycarboxylic acids, phthalic acid esters and naphthalenes. In the present application, plasticizers of polycarboxylic acids include but are not limited to a polycarboxylic superplasticizer (Premia 205) and polycarboxylate derivatives; plasticizers of phthalic acid esters include but are not limited to bis(2-ethylhexyl) phthalate, dioctyl phthalate and dicyclohexyl phthalate; plasticizers of naphthalenes include but are not limited to sulfonated naphthaldehyde and naphthalene sulfonate formaldehyde condensates. Naphthalenes plasticizers include sulfonated naphthaldehyde and naphthalene sulfonate formaldehyde condensates. Any other plasticizers capable of achieving the purpose of the present application may also be used.

In one embodiment of the present application, the dispersant is selected from the group consisting of methyl celluloses, alkylphenol polyethers, styrene-carboxylic acid copolymers and other classes of dispersants. Dispersants of celluloses include but are not limited to methyl cellulose, sodium methyl cellulose and lithium methyl cellulose; dispersants of alkylphenol polyethers include but are not limited to alkylphenol polyoxyethylene ether; dispersants of styrene-carboxylic acid copolymer include but are not limited to sodium salt of styrene-sulfonic acid-acrylic acid copolymer; and other classes of dispersants include sulfonated melamine-formaldehyde, modified lignosulfonate and triethyl phosphate, as long as the purpose of the present application can be achieved.

In one embodiment of the present application, the alkali-based solution comprises 5% to 30% of solute, and the solute is at least one selected from the group consisting of lithium hydroxide, potassium hydroxide and sodium hydroxide.

In one embodiment of the present application, the mass ratio of the anion exchange resin to the first cement-based material is (5%-25%):(75%-95%).

In the present application, water, cement and sand are commonly used materials in the concrete industry, which can be selected by those skilled in the art according to actual needs. There is no particular limitation on them, as long as the purpose of the present application can be achieved.

There is no particular limitation on the anion exchange resin used, as long as the purpose of the present application can be achieved. For example, Amberlite IRA-402 series anion exchange resins from Thermo Fisher, Trilite resins from Samyang, DIAION™ series anion exchange resins from m-chemical, A600 resin from Purolite or IRA402CL resin from Rohm and Haas may be used.

In the second aspect, the present application provides a method for preparing the energy storage battery provided in the first aspect of the present application, comprising the steps of:

embedding the cathode conductive grid construction into the cathode conductive cement mortar to form a semi-wet cathode cement layer, embedding the anode conductive grid construction into the anode conductive cement mortar to form a semi-wet anode cement layer, and mixing the first cement mortar and the anion exchange resin uniformly to form a semi-wet membrane cement layer;

arranging the semi-wet membrane cement layer between the semi-wet cathode cement layer and the semi-wet anode cement layer to form a three-layer bonded cement construction, and pre-curing the three-layer bonded cement construction to obtain a semi-cured three-layer bonded cement construction; and

coating the surface of the semi-cured three-layer bonded cement construction with an outer layer of cement mortar, then curing the outer layer of cement mortar to form a mechanical protecting shell, and thus obtaining the energy storage battery.

In one embodiment of the present application, the semi-wet cathode cement layer or the semi-wet anode cement layer is prepared by horizontal coating or vertical coating. In the present application, horizontal coating includes but is not limited to knife coating, blade coating, slit coating or curtain coating, etc., and vertical coating includes but is not limited to dip coating, roller coating, knife coating, blade coating or slit coating, etc., as long as the purpose of the present application can be achieved. As an example, the horizontal blade coating method is used.

In one embodiment of the present application, the semi-wet membrane cement layer is prepared by horizontal coating or vertical mold casting. Horizontal coating includes but is not limited to knife coating, blade coating, slit coating or curtain coating, etc., as long as the purpose of the present application can be achieved. As an example, the horizontal blade coating method is used.

There is no special limitation on the pre-curing process, which can be handled by those skilled in the art according to the actual conditions, as long as the purpose of the present application can be achieved. As an example, pre-curing is carried out using drying at room temperature for 8 hours to 12 hours.

In one embodiment of the present application, the three-layer bonded cement construction is assembled by a combination of horizontal coating and vertical mold casting.

In the present application, the preparation method of the cathode metal coated carbon fiber grid construction includes but is not limited to electroplating, wet chemical reaction spraying or electroless immersion plating, etc., as long as the purpose of the present application can be achieved. The preparation method of the anode metal coated carbon fiber grid construction includes but is not limited to electroplating, wet chemical reaction spraying or electroless immersion plating, etc., as long as the purpose of the present application can be achieved.

The mechanical shell of the present application is obtained by curing the outer layer of cement mortar. There is no particular limitation on the composition of the outer cement mortar in the present application. For example, it is sufficient to use ordinary cement mortar as the outer cement mortar. Those skilled in the art can make selections according to the actual needs, as long as the purpose of the present application can be achieved. As an example, the ordinary cement mortar contains 18 wt% to 28 wt% of cement, 56 wt% to 71 wt% of sand and 11 wt% to 17 wt% of water. There is no special limitation on the thickness of the mechanical protecting shell, as long as the purpose of the present application can be achieved. As an example, the mechanical protecting shell has a thickness of 5 mm to 50 mm.

In the third aspect, the present application provides an energy storage battery pack comprising a plurality of energy storage batteries provided in the first aspect of the present application connected in series and/or in parallel. By assembling a plurality of energy storage batteries in series or in parallel to form an energy storage battery pack, a higher current and/or voltage can be output, thereby obtaining a higher battery capacity and energy density, which facilitates the application of the energy storage battery provided in the first aspect of the present application and/or the energy storage battery prepared using the method provided in the second aspect of the present application to large-scale energy storage systems.

In the present application, there is no particular limitation on the size of the energy storage battery pack, and the size of the energy storage battery pack can be adaptively adjusted with the change in the number of storage batteries connected in series or in parallel, as long as the purpose of this application can be achieved. As an example, the energy storage battery pack can have a total thickness of 100 mm, 1000 mm or 10000 mm.

In the present application, there is no particular limitation on the assembly method of the energy storage battery pack. The assembly method of the energy storage battery pack includes but is not limited to: multi-layer overlapping assembly, single-layer longitudinal assembly, etc. The energy storage battery pack provided in the present application can be applied to both civil and industrial buildings using cement concrete, and those skilled in this art can adjust the assembly method of the energy storage battery pack according to the application scenario.

In the present application, energy density includes energy density per unit volume (Ev) and energy density per unit area (Es), and energy density refers to both energy density per unit volume and energy density per unit area unless otherwise specified. For example, to increase the energy density means to increase both Ev and Es. In the present application, the output current and output voltage refer to the calculated average output voltage and average output current unless otherwise specified.

In the following, the embodiments of the present application re described more specifically by providing Examples and Comparative Examples. Various tests and evaluations are performed according to the method described below. In addition, "parts" and "%" are weight standards unless otherwise specified.

### Test methods and equipments

### Coating thickness test

The thickness of the metal coating was measured by scanning electron microscopy (SEM) at 10 points and the average value was calculated to obtain the metal coating thickness.

### Output voltage and output current test

The output voltage is in volts (V) and the output current is in amperes (A). The battery output current (I) is obtained by connecting an external resistance, measuring with a Keithley 2700 multimeter to obtain the voltage drop (U), and finally calculating by the following equation:

$$I = \frac{U}{R}$$

The external resistance for testing in all Examples is 160 ohms ($\Omega$), and the external test resistance R for testing in Comparative Example 1 is 10 S2. The number of batteries tested in each Example/Comparative Example is 3. The average output current and average output voltage are obtained by calculating the average value.

### Measurement of discharge time

The discharge time is in hours (h). Discharge time (t) starts at the end of charging time and ends when the current is lower than 2 mA. The discharge time is not counted when the current is lower than 2 mA. The equipment selected for measuring the discharge current is a Keithley 2700 multimeter measurement data acquisition switching system with a programmable transformer.

### Calculation of battery capacity

The battery capacity ($C_p$) is in ampere-hours (Ah), which is calculated from the measured average output current (I) and the discharge time (t) at a specific discharge rate of associated battery by the following equation:

$$C_p = I \times t$$

### Calculation of energy density per unit volume and energy density per unit area

The energy density per unit volume (Ev) and energy density per unit area (Es) of the battery are calculated as follows:

$$Ev = \frac{C_p \cdot U}{Vm}$$

$$Es = \frac{C_p \cdot U}{Sm}$$

wherein $C_p$ is the battery capacity; U is the output voltage; Vm is the battery volume in liters (L); and Sm is the area of the electrodes in the battery in square meters ($m^2$), and then Ev is in watt-hours per liter (Wh/L) and Es is in watt-hours per square meter (Wh/$m^2$).

**Source of anion exchange resin**

The anion exchange resin used in Examples of the present application was Amberlite IRA-402 series anion exchange resin commercially available from Thermo Fisher.

**Source of conductive grid construction**

**Carbon fiber grid construction**

The carbon fiber grid construction used in Examples of the present application is derived from commercial carbon fiber grids.

**Cathode metal coated carbon fiber grid construction**

The cathode metal coated carbon fiber grid construction is obtained by superposing N layers of the cathode metal coated carbon fiber grid. The cathode metal coated carbon fiber grid is prepared by:
placing the part of the carbon fiber grid construction to be electroplated in an electroplating pool solution with a nickel sulfate concentration of 25%, starting the electroplating, terminating the electroplating reaction after 3 hours, cleaning the residual electroplating solution on the surface of the electroplated carbon fiber grid construction, drying and then obtaining the nickel coated carbon fiber grid with a nickel coating thickness of 10 $\mu$m $\pm$ 1 $\mu$m.

**Anode metal coated carbon fiber grid construction**

The anode metal coated carbon fiber grid construction is obtained by superposing M layers of the anode metal coated carbon fiber grid. The anode metal coated carbon fiber grid is prepared by:
placing the part of the carbon fiber grid construction to be electroplated in an electroplating pool solution with an iron sulfate (but not limited to iron sulfate) concentration of 20%, starting the electroplating, terminating the electroplating reaction after 3 hours, cleaning the residual electroplating solution on the surface of the electroplated carbon fiber grid construction, drying and then obtaining the iron coated carbon fiber grid with an iron coating thickness of 10 $\mu$m $\pm$ 1 $\mu$m.

**Example 1-1**

Step 1: 'preparation of cathode conductive cement mortar'

Chopped carbon fiber was mixed with a dispersant and water, stirred uniformly, added with a mixture of cement and sand, mixed and stirred, to which a plasticizer was finally added. The stirring continued until the system was homogeneous to obtain a cathode conductive cement mortar, in which the weight ratio of cement, sand, water, Premia 205 plasticizer and methyl cellulose dispersant was 27.6:55.3:16.5:0.5:0.1, and the weight percentage of chopped carbon fiber was 0.5%, based on the total weight of the cathode conductive cement mortar.

Step 2: 'preparation of semi-wet cathode cement layer'

The cathode conductive cement mortar was blade coated horizontally to form a first semi-wet cathode conductive cement layer. One layer of nickel coated carbon fiber grid construction was placed horizontally on the first semi-wet cathode conductive cement layer. The cathode conductive cement mortar was further blade coated horizontally to obtain the semi-wet cathode cement layer embedded with nickel coated carbon fiber grid construction, which was kept in the semi-wet state for later use. Each layer of the cathode conductive cement mortar to be coated for superposing of the nickel coated carbon fiber grid has a thickness of 2 mm $\pm$ 0.05 mm.

Step 3: 'preparation of membrane cement layer mortar'

Water and potassium hydroxide were mixed uniformly in a weight ratio of 19:1 to obtain an alkali-based solution. Cement, sand, and the alkali-based solution were mixed uniformly in a weight ratio of 44.9:30.6:24.5 to obtain a first cement mortar. An anion exchange resin was added to the first cement mortar and mixed uniformly to form the membrane cement layer mortar, in which the weight ratio of anion exchange resin to the first cement mortar was 15:85.

Step 4: 'preparation of two-layer construction of semi-wet cathode cement layer + semi-wet membrane cement layer'

The membrane cement layer mortar was blade coated horizontally onto the semi-wet cathode cement layer obtained in step 2 to form the semi-wet membrane cement layer, and the two-layer construction of semi-wet cathode cement layer + semi-wet membrane cement layer was obtained , which was kept in the semi-wet state for later use.

Step 5: 'preparation of anode conductive cement mortar'

The chopped carbon fiber was mixed with the dispersant and water, stirred uniformly, added with a mixture of cement and sand, mixed and stirred, to which the plasticizer was finally added. The stirring continued, until the system was homogeneous to obtain the anode conductive cement mortar, in which the weight ratio of cement, sand, water, Premia 205 plasticizer and methyl cellulose dispersant was 27.6:55.3:16.5:0.5:0.1, and the weight percentage of chopped carbon fiber was 0.5%, based on the total weight of the anode conductive cement mortar.

Step 6: 'preparation of three-layer bonded cement construction'

The anode conductive cement mortar was blade coated horizontally onto the semi-wet membrane cement layer obtained in step 4 to form a first semi-wet anode conductive cement layer. One layer of iron coated carbon fiber grid construction was placed horizontally on the first semi-wet anode conductive cement layer, onto which the anode conductive cement mortar was further blade coated horizontally to obtain the semi-wet anode cement layer embedded with the iron coated carbon fiber grid construction. Thus, the three-layer bonded cement construction of semi-wet cathode cement layer + semi-wet membrane cement layer + semi-wet anode cement layer was obtained, which was dried at room temperature for 8 hours for later use. Each layer of the anode conductive cement mortar to be coated for superposing of the iron coated carbon fiber grid has a thickness of 2 mm $\pm$ 0.05 mm.

Step 7: 'preparation of mechanical protecting shell for energy storage battery'

The three-layer bonded cement construction obtained in step 6 was placed in a mold, and a 10 mm outer layer of cement mortar was poured and cured to form the mechanical protecting shell outside the three-layer bonded cement construction, resulting in the energy storage battery. The shell of cement layer was obtained by curing ordinary cement mortar, which was obtained by mixing cement, sand and water in a weight ratio of 21.8:65.2:13.

**Example 1-2**

Step 1: the cathode conductive cement mortar, membrane cement layer mortar and anode conductive cement mortar were prepared according to the same preparation method as in Example 1-1, and kept for later use.
Step 2: the cathode conductive cement mortar was blade coated horizontally to form a first semi-wet cathode conductive cement layer. A first layer of nickel coated carbon fiber grid construction was placed horizontally onto the first semi-wet cathode conductive cement layer, onto which a second semi-wet cathode conductive cement mortar was further blade coated horizontally. A second layer of nickel coated carbon fiber grid construction was placed horizontally onto the second semi-wet cathode conductive cement mortar, with a deflection angle to the first layer of nickel coated carbon fiber grid construction of 45°, onto which a third semi-wet cathode conductive cement mortar was further blade coated horizontally. Thus, the semi-wet cathode cement layer embedded with two layers of nickel coated carbon fiber grid construction was obtained, and kept in the semi-wet state for later use. The thickness of each layer of cathode conductive cement mortar layer to be coated for superposing of the nickel coated carbon fiber grid was 2 mm $\pm$ 0.05 mm.
Step 3: the membrane cement layer mortar was blade coated horizontally onto the above semi-wet cathode cement layer to form a semi-wet membrane cement layer. Thus, a two-layer construction of semi-wet cathode cement layer + semi-wet membrane cement layer was obtained, and kept in the semi-wet state for later use.

Step 4: the anode conductive cement mortar was blade coated horizontally onto the above two-layer construction of semi-wet cathode cement layer + semi-wet membrane cement layer to form a first semi-wet anode conductive cement layer. A first layer iron coated carbon fiber grid construction was placed horizontally onto the first semi-wet anode conductive cement layer, onto which a second layer of the anode conductive cement mortar was further blade coated horizontally. After that, a second iron coated carbon fiber grid construction was placed horizontally onto the second layer of the anode conductive cement mortar, with a deflection angle to the first iron coated carbon fiber grid construction of 45° onto which a third layer of semi-wet anode conductive cement mortar was further blade coated horizontally to form a semi-wet anode cement layer embedded with iron coated carbon fiber grid construction. Thus, the three-layer bonded cement construction of semi-wet cathode cement layer + semi-wet membrane cement layer + semi-wet anode cement layer was obtained, which was dried at room temperature for 8 hours for later use. The thickness of each layer of cathode conductive cement mortar to be coated for superposing of the iron coated carbon fiber grid was 2 mm $\pm$ 0.05 mm.

Step 5: the same as step 7 of 'preparation of mechanical protecting shell for energy storage battery' in Example 1-1.

**Example 1-3 to Example 1-6**

The same as Example 1-2 except that the parameters were changed according to Table 1.

**Example 1-7**

The same as Example 1-2 except that the deflection angle was 0°.

**Example 1-8**

The same as Example 1-5 except that the deflection angle was 0°.

**Comparative Example 1**

The same as Example 1-1 except that an iron sheet with length $\times$ width $\times$ thickness of 50 mm $\times$ 50 mm $\times$ 500 $\mu$m was used instead of the iron coated carbon fiber grid, and a nickel sheet with length $\times$ width $\times$ thickness of 50 mm $\times$ 50 mm $\times$ 500 $\mu$m was used instead of the nickel coated carbon fiber grid.

**Example 2-1**

Three energy storage batteries prepared in accordance with Example 1-1 were connected in series by connecting the cathode of the latter battery with the anode of the former battery to obtain an energy storage battery pack.

**Example 2-2**

Six energy storage batteries prepared in accordance with Example 1-1 were connected in series by connecting the cathode of the latter battery with the anode of the former battery to obtain the energy storage battery pack.

**Example 2-3**

Three energy storage batteries prepared according to Example 1-1 were connected in parallel by connecting the cathode of the latter battery to the cathode of the former battery and connecting the anode of the latter battery to the anode of the former battery to obtain the energy storage battery pack.

**Example 2-4**

Six energy storage batteries prepared according to Example 1-1 were connected in parallel by connecting the cathode of the latter battery to the cathode of the former battery and connecting the anode of the latter battery to the anode of the former battery to obtain the energy storage battery pack.

**Example 2-5**

Nine energy storage batteries prepared in accordance with Example 1-1 were divided into three groups, each of which consists of three batteries. The three batteries of each group were first connected in series, and then the three groups were connected in parallel to obtain the energy storage battery pack.

**Example 2-6**

Twelve energy storage batteries prepared in accordance with Example 1-1 were divided into three groups, each of which consists of four batteries. The four batteries of each group were first connected in series, and then the three groups were connected in parallel to obtain the energy storage battery pack.

**Example 2-7**

Sixteen energy storage batteries prepared in accordance with Example 1-1 were divided into four groups, each of which consists of four batteries. The four batteries of each group were first connected in series, and then the four groups were connected in parallel to obtain the energy storage battery pack.

**Example 3-1 to Example 3-8**

The same as Example 1-1 except that the parameters were adjusted according to Table 3.
The parameters and performance test results for each Example and Comparative Example are shown in Table 1, Table 2, and Table 3, respectively.

Table 1

| | Type of anode conductive grid | Deflection angle of anode conductive grid | Number of layers of anode conductive grid | Type of cathode conductive grid | Deflection angle of cathode conductive grid | Number of layers of cathode conductive grid | Thickness of anode cement layer (mm) | Thickness of cathode cement layer (mm) | Thickness of membrane cement layer (mm) | Average output current (mA) | Average output voltage (V) | Discharge time (h) | Capacity (mAh) | Ev (Wh/L) | Es (Wh/m²) |
|---|---|---|---|---|---|---|---|---|---|---|---|---|---|---|---|
| Example1-1 | CF-1-Fe | / | 1 | CF-1-Ni | / | 1 | 5 | 5 | 1 | 6.7 | 1.13 | 12.2 | 81.74 | 1.71 | 18.89 |
| Example1-2 | CF-2-Fe | 45° | 2 | CF-2-Ni | 45° | 2 | 8 | 8 | 1 | 7.5 | 1.10 | 23.1 | 173.25 | 2.29 | 39.15 |
| Example1-3 | CF-3-Fe | 30° | 3 | CF-3-Ni | 30° | 3 | 11 | 11 | 1 | 7.7 | 1.11 | 34.7 | 267.19 | 2.63 | 59.01 |
| Example1-4 | CF-4-Fe | 22.5° | 4 | CF-4-Ni | 22.5° | 4 | 14 | 14 | 1 | 7.5 | 1.08 | 46.3 | 347.25 | 2.64 | 77.32 |
| Example1-5 | CF-6-Fe | 15° | 6 | CF-6-Ni | 15° | 6 | 20 | 20 | 1 | 7.9 | 1.11 | 69.4 | 548.26 | 3.03 | 118.36 |
| Example1-6 | CF-9-Fe | 10° | 9 | CF-9-Ni | 10° | 9 | 29 | 29 | 1 | 7.9 | 1.09 | 104.1 | 822.39 | 3.10 | 172.62 |
| Example1-1 | CF-2-Fe | 0° | 2 | CF-2-Ni | 0° | 2 | 8 | 8 | 1 | 7.3 | 1.07 | 22.2 | 162.06 | 2.08 | 37.82 |
| Example1-8 | CF-6-Fe | 0° | 6 | CF-6-Ni | 0° | 6 | 20 | 20 | 1 | 7.5 | 1.06 | 66.5 | 498.75 | 2.63 | 112.71 |
| Comparative Example 1 | Iron sheet | / | 1 | Nickel sheet | / | 1 | 5 | 5 | 1 | 0.02 | 0.45 | 24 | 0.48 | 0.004 | 0.05 |

"/" indicates that the prepared energy storage battery does not have this parameter.

Table 2

| Example | Number of batteries that make up the battery pack | Connection method of battery pack (series/ parallel) | Average output current (mA) | Average output voltage (V) | Discharge time (h) | Capacity (mAh) | Ev(Wh/L) | Es(Wh/m$^2$) |
|---|---|---|---|---|---|---|---|---|
| 1-1 | 1 | / | 6.7 | 1.1 | 12.2 | 81.74 | 1.71 | 18.89 |
| 2-1 | 3 | series×3 | 20.6 | 3.2 | 12.3 | 253.38 | 5.01 | 55.16 |
| 2-2 | 6 | series×6 | 41.3 | 6.5 | 12.0 | 495.60 | 9.96 | 109.57 |
| 2-3 | 3 | parallel×3 | 6.9 | 1.1 | 35.9 | 247.71 | 1.69 | 18.54 |
| 2-4 | 6 | parallel×6 | 6.9 | 1.1 | 70.1 | 483.69 | 1.65 | 18.10 |
| 2-5 | 9 | series×3/parallel×3 | 20.6 | 3.3 | 36.9 | 760.14 | 5.17 | 56.88 |
| 2-6 | 12 | series×4/parallel×3 | 26.9 | 4.3 | 36.6 | 984.54 | 6.55 | 72.00 |
| 2-7 | 16 | series×4/parallel×4 | 27.5 | 4.4 | 48.8 | 1342.00 | 6.85 | 75.32 |

Table 3

| Example | Conductive agent in the anode cement layer | Content of conductive agent in the anode cement layer (wt%) | Content of second cement mortar in the anode cement layer (wt%) | Weight ratio of cement: sand:water: plasticizer: dispersant in the anode cement layer | Conductive agent in the cathode cement layer | Content of conductive agent in the cathode cement layer (wt%) | Content of second cement mortar in the cathode cement layer (wt%) | Weight ratio of cement:sand: water:plasticizer: dispersant in the cathode cement layer | Content of anion exchange resin in the membrane cement layer (wt%) | Content of first cement mortar in the membrane cement layer (wt%) | Weight ratio of cement: sand: alkali-based solution in the membrane cement layer | Average output current (mA) | Average output voltage (V) | Discharge time (h) | Capacity (mAh) | Ev( Wh/ L) |
|---|---|---|---|---|---|---|---|---|---|---|---|---|---|---|---|---|
| 1-1 | chopped carbon fiber | 0.5 | 99.5 | 27.6:55.3:16.5 :0.5:0.1 | chopped carbon fiber | 0.5 | 99.5 | 27.6:55.3:16.5 :0.5:0.1 | 15 | 85 | 44.9:30.6 :24.5 | 6.7 | 1.13 | 12.2 | 81.74 | 1.71 |
| 3-1 | chopped carbon fiber | 0.3 | 99.7 | 27.6:55.3:16.5 :0.5:0.1 | chopped carbon fiber | 0.3 | 99.7 | 27.6:55.3:16.5 :0.5:0.1 | 15 | 85 | 44.9:30.6 :24.5 | 6.1 | 1.0 | 11.4 | 69.54 | 1.29 |
| 3-2 | chopped carbon fiber | 0.7 | 99.3 | 27.6:55.3:16.5 :0.5:0.1 | chopped carbon fiber | 0.7 | 99.3 | 27.6:55.3:16.5 :0.5:0.1 | 15 | 85 | 44.9:30.6 :24.5 | 6.7 | 1.1 | 12.5 | 83.75 | 1.71 |
| 3-3 | chopped carbon fiber | 0.5 | 99.5 | 28.8:57.6:13.0 :0.5:0.1 | chopped carbon fiber | 0.5 | 99.5 | 27.6:55.3:16.5 :0.5:0.1 | 15 | 85 | 44.9:30.6 :24.5 | 6.8 | 1.1 | 12.6 | 85.68 | 1.75 |
| 3-4 | chopped carbon fiber | 0.5 | 99.5 | 26.2:52.3:20.9 :0.5:0.1 | chopped carbon fiber | 0.5 | 99.5 | 26.2:52.3:20.9 :0.5:0.1 | 15 | 85 | 44.9:30.6 :24.5 | 6.5 | 1.1 | 11.5 | 74.75 | 1.53 |
| 3-5 | chopped carbon fiber | 0.5 | 99.5 | 27.6:55.3:16.5 :0.5:0.1 | chopped carbon fiber | 0.5 | 99.5 | 27.6:55.3:16.5 :0.5:0.1 | 5 | 95 | 44.9:30.6 :24.5 | 6.5 | 1.1 | 9.2 | 59.80 | 1.22 |
| 3-6 | chopped carbon fiber | 0.5 | 99.5 | 27.6:55.3:16.5 :0.5:0.1 | chopped carbon fiber | 0.5 | 99.5 | 27.6:55.3:16.5 :0.5:0.1 | 25 | 75 | 44.9:30.6 :24.5 | 6.7 | 1.1 | 12.5 | 83.75 | 1.71 |
| 3-7 | carbon black | 7 | 93 | 26.2:52.3:20.9 :0.5:0.1 | carbon black | 7 | 93 | 26.2:52.3:20.9 :0.5:0.1 | 15 | 85 | 44.9:30.6 :24.5 | 6.8 | 1.1 | 13.9 | 94.52 | 1.93 |
| 3-8 | expanded graphite | 0.5 | 99.5 | 27.6:55.3:16.5 :0.5:0.1 | expanded graphite | 0.5 | 99.5 | 27.6:55.3:16.5 :0.5:0.1 | 15 | 85 | 44.9:30.6 :24.5 | 6.1 | 1.0 | 10.2 | 62.22 | 1.15 |

As shown in FIG. 1, to facilitate connection with external devices, one end of the cathode conductive grid construction 111 was not coated with cathode conductive cement-based material 112, which can be used in the cathode of the cement energy storage battery, and one end of the anode conductive grid construction 121 was not coated with anode conductive cement-based material 122, which can be used in the anode of the cement energy storage battery. It should be noted that for the metal coated carbon fiber grid construction, one end used for connecting with external devices does not require electroplating and can be used directly as the cathode or anode. The carbon fiber with good electrical conductivity can be directly connected to the external device without electroplating, and loss of the electroplating layer due to friction can be avoided.

From Example 1-1 and Comparative Example 1, it can be concluded that the selection of the cathode conductive grid construction and anode conductive grid construction of the present application can increase the effective reaction contact area between the cathode active substance nickel and the anode active substance iron, which is conducive to prolonging the discharge time and improving the battery capacity and energy density of the energy storage battery.

In Example 1-2 to Example 1-6, increasing the deflection angle is conducive to improving the conductive uniformity of the entire energy storage battery. Additionally, as the number of layers of grid increases, the contents of active material per unit battery area of cathode active material nickel and anode active material iron increase, which is conducive to prolonging the discharge time and improving the battery capacity and energy density of the energy storage battery.

From Example 1-2, Example 1-5, Example 1-7 and Example 1-8, it can be concluded that increasing the deflection angle is conducive to improving the conductive uniformity of the entire energy storage battery, thereby prolonging the discharge time and improving the battery capacity and energy density of the energy storage battery.

From Example 2-1 and Example 2-2, it can be concluded that increasing the number of series-connected batteries can increase the output voltage of the energy storage battery pack and, accordingly, the output current, capacity and energy density of the energy storage battery pack can be increased under the same load resistance.

From Example 2-3 and Example 2-4, it can be concluded that as the number of parallel-connected batteries increases, the output voltage and energy density of the energy storage battery remains the same, and the discharge time as well as the battery capacity of the energy storage battery pack can be increased under the same load resistance.

From Example 2-5 to Example 2-7, it can be concluded that by changing the series and parallel connection mode of and the number of the battery pack, parameters such as output voltage, output current, discharge time, battery capacity, energy density per unit volume and energy density per unit area, of the battery pack can be adjusted to improve the performance of the energy storage battery pack so as to obtain an energy storage battery pack suitable for use in large-scale energy storage systems.

From Example 1-1, Example 3-1 and Example 3-2, it can be concluded that increasing the content of conductive agent within the scope of the present application is conducive to prolonging the discharge time and improving the battery capacity of the energy storage battery.

From Example 1-1, Example 3-3 and Example 3-4, it can be concluded that the energy storage battery provided by the present application can be obtained by adjusting the content of each component in the anode cement layer/cathode cement layer within the scope of the present application.

From Example 1-1, Example 3-5 and Example 3-6, it can be concluded that increasing the content of anion exchange resin within the scope of the present application is conducive to prolonging the discharge time and improving the battery capacity and energy density of the energy storage battery.

From Example 1-1, Example 3-7 and Example 3-8, it can be concluded that selecting conductive agents within the scope of the present application can form a better percolation conductive network, resulting in an energy storage battery with high capacity and energy density and long discharge time.

The energy storage battery or the energy storage battery pack provided in the present application can achieve the conversion from cement concrete to low-carbon or carbon-negative products, in which the materials used are low cost and widely available. Thus, the energy storage battery or the energy storage battery pack provided in the present application can be used in large-scale energy storage systems, in which the electrode materials used have higher safety performance compared to those of commercial lithium batteries.

It should be noted that relationship terms such as first and second are used only to distinguish one entity from another and do not necessarily require or imply any actual relationship or order between these entities.

Each embodiment in the specification is described in a relevant manner. The same or similar parts between each embodiment can be cross-referenced to each other. Each embodiment is focused on a difference from other embodiments.

**Claims**

1. An energy storage battery comprising a cathode cement layer, an anode cement layer and a membrane cement layer arranged between the cathode cement layer and the anode cement layer;

wherein the cathode cement layer comprises a cathode conductive grid construction and a cathode conductive cement-based material arranged on both sides of the cathode conductive grid construction, the anode cement layer comprises an anode conductive grid construction and an anode conductive cement-based material arranged on both sides of the anode conductive grid construction, and the membrane cement layer comprises an anion exchange resin and a first cement-based material;

the cathode conductive cement-based material is obtained by curing a cathode conductive cement mortar consisting of 0.3 wt% to 9 wt% of a conductive agent and 91 wt% to 99.7 wt% of a second cement mortar, and the anode conductive cement-based material is obtained by curing an anode conductive cement mortar consisting of 0.3 wt% to 9 wt% of the conductive agent and 91 wt% to 99.7 wt% of the second cement mortar; and

the conductive agent is at least one selected from the group consisting of chopped carbon fiber, carbon black and expanded graphite.

2. The energy storage battery according to claim 1, wherein the second cement mortar comprises 15 wt% to 25 wt% of cement, 40 wt% to 50 wt% of sand, 20 wt% to 35 wt% of water, 0 wt% to 3 wt% of a plasticizer and 0.1 wt% to 3 wt% of a dispersant; the first cement-based material is obtained by curing a first cement mortar comprising 25 wt% to 50 wt% of cement, 30 wt% to 55 wt% of sand and 15 wt% to 25wt% of an alkali-based solution.

3. The energy storage battery according to claim 1, wherein the cathode cement layer has a thickness of 5 mm to 50 mm; the anode cement layer has a thickness of 5 mm to 50 mm; and the membrane cement layer has a thickness of 0.5 mm to 5 mm.

4. The energy storage battery according to claim 1, wherein the cathode conductive grid construction is selected from the group consisting of cathode metal coated carbon fiber grid constructions comprising a cathode metal coating of nickel coating, and the nickel coating has a thickness of 0.1 $\mu$m to 1 mm; and

the anode conductive grid construction is selected from the group consisting of anode metal coated carbon fiber grid constructions comprising an anode metal coating of iron coating, and the iron coating has a thickness is 0.1 $\mu$m to 1 mm.

5. The energy storage battery according to claim 4, wherein the cathode metal coated carbon fiber grid construction is obtained by superposing N layers of cathode metal coated carbon fiber grid, $2 \leq N \leq 9$; the anode metal coated carbon fiber carbon fiber grid construction is obtained by superposing M layers of anode metal coated carbon fiber grid, $2 \leq M \leq 9$; N and M are the same or different; and

the superposing is in the same or different directions.

6. The energy storage battery according to claim 2, wherein the plasticizer is selected from the group consisting of polycarboxylic acids, phthalic acid esters and naphthalenes.

7. The energy storage battery according to claim 2, wherein the dispersant is selected from the group consisting of celluloses, alkylphenol polyethers, styrene-carboxylic acid copolymers and other classes of dispersants, and the other classes of dispersants are any one selected from the group consisting of sulfonated melamine formaldehyde, modified lignosulfonate and triethyl phosphate.

8. The energy storage battery according to claim 2, wherein the alkali-based solution comprises 5% to 30% by weight of solute, and the solute is at least one selected from the group consisting of lithium hydroxide, potassium hydroxide and sodium hydroxide.

9. The energy storage battery according to claim 1, wherein the weight ratio of the anion exchange resin to the first cement-based material is (5%-25%):(75%-95%).

10. A method for preparing the energy storage battery of any one of claims 1-9, comprising the steps of:

embedding the cathode conductive grid construction into the cathode conductive cement mortar to form a semi-wet cathode cement layer, embedding the anode conductive grid construction into the anode conductive cement mortar to form a semi-wet anode cement layer, and mixing the first cement mortar and the anion exchange resin uniformly to form a semi-wet membrane cement layer;

arranging the semi-wet membrane cement layer between the semi-wet cathode cement layer and the semi-wet anode cement layer to form a three-layer bonded cement construction, and pre-curing the three-layer bonded cement construction to obtain a semi-cured three-layer bonded cement construction; and

coating the surface of the semi-cured three-layer bonded cement construction with an outer layer of cement mortar, then curing the outer layer of cement mortar to form a mechanical protecting shell, and thus obtaining the energy storage battery.

**11.** The method according to claim 10, wherein the semi-wet cathode cement layer or the semi-wet anode cement layer is prepared by horizontal coating or vertical coating.

**12.** The method according to claim 10, wherein the semi-wet membrane cement layer is prepared by horizontal coating or vertical mold casting.

**13.** The method according to claim 10, wherein the three-layer bonded cement construction is assembled by a combination of horizontal coating and vertical mold casting.

**14.** An energy storage battery pack comprising a plurality of energy storage batteries of any one of claims 1-9 connected in series and/or in parallel.

**Patentansprüche**

**1.** Energiespeicherbatterie, die eine Kathodenzementschicht, eine Anodenzementschicht und eine zwischen der Kathodenzementschicht und der Anodenzementschicht angeordnete Membranzementschicht aufweist;

wobei die Kathodenzementschicht eine leitende Kathoden-Gitterkonstruktion und ein leitendes zementbasiertes Kathodenmaterial aufweist, das auf beiden Seiten der leitenden Kathoden-Gitterkonstruktion angeordnet ist, die Anodenzementschicht eine leitende Anoden-Gitterkonstruktion und ein leitendes zementbasiertes Anodenmaterial aufweist, das auf beiden Seiten der leitenden Anoden-Gitterkonstruktion angeordnet ist, und die Membranzementschicht ein Anionenaustauscherharz und ein erstes zementbasiertes Material aufweist;
wobei das leitfähige zementbasierte Kathodenmaterial durch Aushärten eines leitfähigen Kathoden-Zementmörtels erhalten wird, der aus 0,3 Gew.-% bis 9 Gew.-% eines leitfähigen Mittels und 91 Gew.-% bis 99,7 Gew.-% eines zweiten Zementmörtels besteht, und das leitfähige zementbasierte Anodenmaterial durch Aushärten eines leitfähigen Anoden-Zementmörtels erhalten wird, der aus 0,3 Gew.-% bis 9 Gew.-% des leitfähigen Mittels und 91 Gew.-% bis 99,7 Gew.-% des zweiten Zementmörtels besteht; und
wobei das leitfähige Mittel mindestens eines aus der Gruppe ausgewählt ist, die aus geschnittenen Kohlenstoffasern, Ruß und Blähgraphit besteht.

**2.** Energiespeicherbatterie nach Anspruch 1, wobei der zweite Zementmörtel 15 Gew.-% bis 25 Gew.-% Zement, 40 Gew.-% bis 50 Gew.-% Sand, 20 Gew.-% bis 35 Gew.-% Wasser, 0 Gew.-% bis 3 Gew.-% eines Weichmachers und 0,1 Gew.-% bis 3 Gew.-% eines Dispergiermittels aufweist; wobei das erste zementbasierte Material erhalten wird durch Aushärten eines ersten Zementmörtels, der 25 Gew.-% bis 50 Gew.-% Zement, 30 Gew.-% bis 55 Gew.-% Sand und 15 Gew.-% bis 25 Gew.-% einer alkalibasierten Lösung aufweist.

**3.** Energiespeicherbatterie nach Anspruch 1, wobei die Kathodenzementschicht eine Dicke von 5 mm bis 50 mm aufweist, die Anodenzementschicht eine Dicke von 5 mm bis 50 mm aufweist und die Membranzementschicht eine Dicke von 0,5 mm bis 5 mm aufweist.

**4.** Energiespeicherbatterie nach Anspruch 1, wobei die leitende Kathoden-Gitterkonstruktion aus der Gruppe ausgewählt ist, die aus mit Kathodenmetall beschichteten Kohlenstofffaser-Gitterkonstruktionen besteht, die eine Kathodenmetallbeschichtung aus einer Nickelbeschichtung aufweisen, und die Nickelbeschichtung eine Dicke von 0,1 $\mu$m bis 1 mm aufweist; und die leitende Anoden-Gitterkonstruktion aus der Gruppe ausgewählt ist, die aus mit Anodenmetall beschichteten Kohlenstofffaser-Gitterkonstruktionen besteht, die eine Anodenmetallbeschichtung aus einer Eisenbeschichtung aufweisen, und die Eisenbeschichtung eine Dicke von 0,1 $\mu$m bis 1 mm aufweist.

**5.** Energiespeicherbatterie nach Anspruch 4, wobei die mit Kathodenmetall beschichtete Kohlenstofffaser-Gitterkonstruktionen durch Überlagern von N Schichten eines mit Kathodenmetall beschichteten Kohlenstofffaser-Gitters erhalten wird, wobei $2 \leq N \leq 9$ ist; die mit Anodenmetall beschichtete Kohlenstofffaser-Gitterkonstruktionen durch Überlagern von M Schichten eines mit Anodenmetall beschichteten Kohlenstofffaser-Gitters erhalten wird, wobei $2 \leq M \leq 9$ ist, wobei N und M gleich oder verschieden sind; und wobei die Überlagerung in die gleiche oder in verschiedene Richtungen erfolgt.

6. Energiespeicherbatterie nach Anspruch 2, wobei der Weichmacher aus der Gruppe ausgewählt ist, die aus Polycarbonsäuren, Phthalsäureestern und Naphthalinen besteht.

7. Energiespeicherbatterie nach Anspruch 2, wobei das Dispergiermittel aus der Gruppe ausgewählt ist, die aus Cellulosen, Alkylphenolpolyethern, Styrol-Carbonsäure-Copolymeren und anderen Klassen von Dispergiermitteln besteht, und die anderen Klassen von Dispergiermitteln aus der Gruppe ausgewählt sind, die aus sulfoniertem Melaminformaldehyd, modifiziertem Lignosulfonat und Triethylphosphat besteht.

8. Energiespeicherbatterie nach Anspruch 2, wobei die alkalibasierte Lösung 5 bis 30 Gew.-% gelösten Stoff aufweist und der gelöste Stoff mindestens einer ist, der aus der Gruppe ausgewählt ist, die aus Lithiumhydroxid, Kaliumhydroxid und Natriumhydroxid besteht.

9. Energiespeicherbatterie nach Anspruch 1, wobei das Gewichtsverhältnis des Anionenaustauscherharzes zu dem ersten zementbasierten Material (5 % - 25 %) : (75 % - 95 %) beträgt.

10. Verfahren zur Herstellung der Energiespeicherbatterie nach einem der Ansprüche 1 - 9, das die folgenden Schritte aufweist:

Einbetten der leitenden Kathoden-Gitterkonstruktion in den leitenden Kathodenzementmörtel, um eine halbnasse Kathodenzementschicht zu bilden, Einbetten der leitenden Anoden-Gitterkonstruktion in den leitenden Anodenzementmörtel, um eine halbnasse Anodenzementschicht zu bilden, und gleichmäßiges Mischen des ersten Zementmörtels und des Anionenaustauscherharzes, um eine halbnasse Membranzementschicht zu bilden;
Anordnen der halbfeuchten Membranzementschicht zwischen der halbfeuchten Kathodenzementschicht und der halbfeuchten Anodenzementschicht, um eine dreischichtige Verbundzementkonstruktion zu bilden, und Vorhärten der dreischichtigen Verbundzementkonstruktion, um eine halbgehärtete dreischichtige Verbundzementkonstruktion zu erhalten; und
Beschichten der Oberfläche der halbgehärteten dreischichtigen Verbundzementkonstruktion mit einer äußeren Schicht aus Zementmörtel, dann Aushärten der äußeren Schicht aus Zementmörtel, um eine mechanische Schutzhülle zu bilden, und somit die Energiespeicherbatterie zu erhalten.

11. Verfahren nach Anspruch 10, wobei die halbnasse Kathodenzementschicht oder die halbnasse Anodenzementschicht durch horizontales Beschichten oder vertikales Beschichten hergestellt wird.

12. Verfahren nach Anspruch 10, wobei die halbnasse Membranzementschicht durch horizontales Beschichten oder vertikales Formgießen hergestellt wird.

13. Verfahren nach Anspruch 10, wobei die dreischichtige Verbundzementkonstruktion durch eine Kombination aus horizontalem Beschichten und vertikalem Formgießen zusammengesetzt wird.

14. Energiespeicherbatteriepack, das eine Vielzahl von Energiespeicherbatterien nach einem der Ansprüche 1-9 aufweist, die in Reihe und/oder parallel geschaltet sind.

**Revendications**

1. Batterie de stockage d'énergie comprenant une couche de ciment de cathode, une couche de ciment d'anode et une couche de ciment de membrane disposée entre la couche de ciment de cathode et la couche de ciment d'anode ;

dans laquelle la couche de ciment de cathode comprend une construction de grille conductrice de cathode et un matériau à base de ciment conducteur de cathode disposé sur les deux côtés de la construction de grille conductrice de cathode, la couche de ciment d'anode comprend une construction de grille conductrice d'anode et un matériau à base de ciment conducteur d'anode disposé sur les deux côtés de la construction de grille conductrice d'anode, et la couche de ciment de membrane comprend une résine échangeuse d'anions et un premier matériau à base de ciment ;
le matériau à base de ciment conducteur de cathode est obtenu en durcissant un mortier de ciment conducteur de cathode constitué de 0,3 % en poids à 9 % en poids d'un agent conducteur et de 91 % en poids à 99,7 % en poids d'un deuxième mortier de ciment, et le matériau à base de ciment conducteur d'anode est obtenu en durcissant un mortier de ciment conducteur d'anode constitué de 0,3 % en poids à 9 % en poids de l'agent conducteur et de 91 % en poids à 99,7 % en poids du deuxième mortier de ciment ; et

l'agent conducteur est au moins un élément choisi dans le groupe constitué de fibres de carbone hachées, de noir de carbone et de graphite expansé.

2. Batterie de stockage d'énergie selon la revendication 1, dans laquelle le deuxième mortier de ciment comprend 15 % en poids à 25 % en poids de ciment, 40 % en poids à 50 % en poids de sable, 20 % en poids à 35 % en poids d'eau, 0 % en poids à 3 % en poids d'un plastifiant et 0,1 % en poids à 3 % en poids d'un agent de dispersion ; le premier matériau à base de ciment est obtenu par durcissement d'un premier mortier de ciment comprenant 25 % en poids à 50 % en poids de ciment, 30 % en poids à 55 % en poids de sable et 15 % en poids à 25 % en poids d'une solution à base alcaline.

3. Batterie de stockage d'énergie selon la revendication 1, dans laquelle la couche de ciment de cathode a une épaisseur de 5 mm à 50 mm ; la couche de ciment d'anode a une épaisseur de 5 mm à 50 mm ; et la couche de ciment de membrane a une épaisseur de 0,5 mm à 5 mm.

4. Batterie de stockage d'énergie selon la revendication 1, dans laquelle la construction de grille conductrice de cathode est choisie dans le groupe constitué de constructions de grille en fibre de carbone revêtues de métal de cathode comprenant un revêtement métallique de cathode en nickel, et le revêtement en nickel a une épaisseur de 0,1 $\mu$m à 1 mm ; et

la construction de grille conductrice d'anode est choisie dans le groupe constitué de constructions de grille en fibre de carbone revêtues de métal d'anode comprenant un revêtement métallique d'anode en fer, et le revêtement en fer a une épaisseur de 0,1 $\mu$m à 1 mm.

5. Batterie de stockage d'énergie selon la revendication 4, dans laquelle la construction de grille en fibre de carbone revêtue de métal de cathode est obtenue en superposant N couches de grille en fibre de carbone revêtue de métal de cathode, $2 \leq N \leq 9$ ; la construction de grille en fibre de carbone revêtue de métal d'anode est obtenue en superposant M couches de grille en fibre de carbone revêtue de métal d'anode, $2 \leq M \leq 9$ ; N et M sont identiques ou différents ; et la superposition est dans des directions identiques ou différentes.

6. Batterie de stockage d'énergie selon la revendication 2, dans laquelle le plastifiant est choisi dans le groupe constitué par les acides polycarboxyliques, les esters d'acide phtalique et les naphtalènes.

7. Batterie de stockage d'énergie selon la revendication 2, dans laquelle l'agent de dispersion est choisi dans le groupe constitué par les celluloses, les polyéthers d'alcoylphénol, les copolymères styrène-acide carboxylique et d'autres classes d'agents de dispersion, et les autres classes d'agents de dispersion sont l'un quelconque choisi dans le groupe constitué par le formaldéhyde de mélamine sulfoné, le lignosulfonate modifié et le phosphate de triéthyle.

8. Batterie de stockage d'énergie selon la revendication 2, dans laquelle la solution à base alcaline comprend 5 % à 30 % en poids de soluté, et le soluté est au moins un soluté choisi dans le groupe constitué par l'hydroxyde de lithium, l'hydroxyde de potassium et l'hydroxyde de sodium.

9. Batterie de stockage d'énergie selon la revendication 1, dans laquelle le rapport pondéral de la résine échangeuse d'anions au premier matériau à base de ciment est (5 % à 25 %) : (75 % à 95 %).

10. Procédé de préparation de la batterie de stockage d'énergie selon l'une quelconque des revendications 1 à 9, comprenant les étapes consistant à :

incorporer la construction de grille conductrice de cathode dans le mortier de ciment conducteur de cathode pour former une couche de ciment de cathode semi-humide, incorporer la construction de grille conductrice d'anode dans le mortier de ciment conducteur d'anode pour former une couche de ciment d'anode semi-humide, et mélanger le premier mortier de ciment et la résine échangeuse d'anions uniformément pour former une couche de ciment de membrane semi-humide ;

disposer la couche de ciment de membrane semi-humide entre la couche de ciment de cathode semi-humide et la couche de ciment d'anode semi-humide pour former une construction de ciment collé à trois couches, et pré-durcir la construction de ciment collé à trois couches pour obtenir une construction de ciment collé à trois couches semi-durcie ; et

revêtir la surface de la construction en ciment collé à trois couches semi-durcie avec une couche extérieure de mortier de ciment, puis durcir la couche extérieure de mortier de ciment pour former une coque de protection mécanique, et obtenir ainsi la batterie de stockage d'énergie.

11. Procédé selon la revendication 10, dans lequel la couche de ciment de cathode semi-humide ou la couche de ciment d'anode semi-humide est préparée par revêtement horizontal ou revêtement vertical.

12. Procédé selon la revendication 10, dans lequel la couche de ciment à membrane semi-humide est préparée par revêtement horizontal ou par moulage vertical.

13. Procédé selon la revendication 10, dans lequel la construction en ciment collé à trois couches est assemblée par une combinaison de revêtement horizontal et de moulage vertical.

14. Bloc-batterie de stockage d'énergie comprenant une pluralité de batteries de stockage d'énergie selon l'une quelconque des revendications 1 à 9 connectées en série et/ou en parallèle.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 905280 A
- CN 109585854 A
- CN 108933263 A